# EUROPEAN PATENT SPECIFICATION

(11) **EP 4 329 570 B1**
(45) Date of publication and mention of the grant of the patent: **28.10.2026**
(21) Application number: 22722971.3
(22) Date of filing: 26.04.2022
(51) Int. Cl.: A47J 45/02

(54) **MODULAR MAGNETIC SUPPORT STRIP**
MODULARER MAGNETISCHER TRÄGERSTREIFEN
BANDE DE SUPPORT MAGNÉTIQUE MODULAIRE

(30) Priority: 30.04.2021 US 202117245773
(43) Date of publication of application: 06.03.2024
(73) Proprietor: Hurley, Jonathan, Columbia Falls, MT 59912 (US)
(72) Inventor: Hurley, Jonathan, Columbia Falls, MT 59912 (US)
(74) Representative: AWA Sweden AB
(86) International application number: PCT/US2022/026300
(87) International publication number: WO 2022/232111

(56) References cited:
- US-A- 2 565 625
- US-A- 5 855 285
- US-A1- 2020 122 315

## Description

### BACKGROUND

A typical magnetic strip holder for holding tools, knives, and other kitchen utensils is constructed of a fixed length magnet mounted on a backing bar that is designed for attachment to a wall or other surface. In this regard, holes extend through the ends of the backing bar to receive screws therethrough. The strip holder is of fixed length, and thus may not always fit at the location where it is desirable to mount the magnetic strip holder. Also, it is necessary to physically mount the backing bar on a wall or surface, even if the surface is ferromagnetic, because the strip holder is not able to be magnetically attached to the ferromagnetic surface. The present disclosure seeks to address the drawbacks of existing magnetic strip holders.

US 2020/0122315 A1 discloses an interchangeable and interconnectable tool organizing device.

### SUMMARY

This summary is provided to introduce a selection of concepts in a simplified form that are further described below in the Detailed Description.

In accordance with one embodiment of the present disclosure, a magnetic modular strip holder with the features of claim 1 is provided.

In any of the embodiments disclosed herein, wherein the magnet is in the shape of an orthotope.

In any of the embodiments disclosed herein, wherein the orthotope is of a shape selected from a right rectangular prism, rectangular cuboid, and rectangular parallelepiped.

In any of the embodiments disclosed herein, wherein the ferromagnetic plate overlies substantially the entirety of the back surface of the magnet.

In any of the embodiments disclosed herein, wherein the cavity in the housing is sized and shaped to receive the second ferromagnetic plate of the adjacent magnetic holder unit.

In any of the embodiments disclosed herein, not forming part of the invention, the housing defines a first end and an opposite second end, and the interconnector comprises a dovetail projecting from the housing to engage the correspondingly shaped slot formed in the housing of an adjacent magnetic unit.

In any of the embodiments disclosed herein, not forming part of the invention, the dovetail projects from the housing at a location corresponding to the back surface of the magnet, and the corresponding slot formed in the housing at a location corresponding to the back surface of the magnet.

In any of the embodiments disclosed herein, wherein the housing comprises top and bottom surfaces, and further comprising a mounting projection projecting from at least one of the top and bottom surfaces of the housing.

In any of the embodiments disclosed herein, wherein a through hole extends through the mounting projection for receiving mounting hardware therethrough.

In any of the embodiments disclosed herein, wherein the housing has a back surface corresponding to the back surface of the magnet, and the mounting projection is disposed as substantially flush with the back surface of the housing.

### DESCRIPTION OF THE DRAWINGS

The foregoing aspects and many of the attendant advantages of this invention will become more readily appreciated as the same become better understood by reference to the following detailed description, when taken in conjunction with the accompanying drawings, wherein:
FIGURE 1 is a pictorial view of the magnetic modular strip holder of the present disclosure wherein a plurality of modular magnetic holder units are assembled together to form an elongated holder shown as holding various types of tools;
FIGURE 2 is a pictorial view of modular magnetic holder unit in accordance with an embodiment not forming part of the invention;
FIGURE 3 is a pictorial view of FIGURE 2 showing the magnet and a ferromagnetic plate disassembled from the housing;
FIGURE 4 is a pictorial view showing the connector for connecting the modular magnetic holder units of FIGURES 2 and 3;
FIGURE 5 is a pictorial view of the modular magnetic holder unit in accordance with the present disclosure;
FIGURE 6 is a pictorial view of FIGURE 5 showing the magnet and the ferromagnetic plates disassembled from the housing;
FIGURE 7 is a pictorial view showing the connector for interconnecting the modular magnetic holder units of FIGURES 5 and 6.

### DETAILED DESCRIPTION

Various example embodiments of the present disclosure are described below with reference to the accompanying drawings in which some example embodiments are illustrated. In the figures, the thicknesses of lines, layers and/or regions may be exaggerated for clarity.

While example embodiments are capable of various modifications and alternative forms, embodiments thereof are shown by way of example in the figures and are described in detail below. It should be understood, however, that there is no intent to limit example embodiments to the particular forms disclosed, but on the contrary, example embodiments are to cover all modifications, equivalents, and alternatives falling within the scope of the disclosure.

It is understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art. However, should the present disclosure give a specific meaning to a term deviating from a meaning commonly understood by one of ordinary skill, this meaning is to be considered in the specific context this definition is given herein.

In the following description, numerous specific details are set forth in order to provide a thorough understanding of exemplary embodiments of the present disclosure. It will be apparent to one skilled in the art, however, that many embodiments of the present disclosure may be practiced without some or all of the specific details. Further, it will be appreciated that embodiments of the present disclosure may employ any combination of features described herein.

The present application may include references to directions, such as "forward," "rearward," "front," "back," "ahead," "behind," "upward," "downward," "above," "below," "top," "bottom," "right hand," left hand," "in," "out," "extended," "advanced," "retracted," "proximal," "distal," "central," "vertical," etc. These references and other similar references in the present application are only to assist in helping describe and understand the present invention and are not intended to limit the present invention to these directions or locations.

The present application may also reference quantities and numbers. Unless specifically stated, such quantities and numbers are not to be considered restrictive, but exemplary of the possible quantities or numbers associated with the present application. Also, in this regard, the present application may use the term "plurality" to reference a quantity or number. In this regard, the term "plurality" is meant to be any number that is more than one, for example, two, three, four, five, etc.

The present application may include modifiers such as the words "generally," "approximately," "about", or "substantially." These terms are meant to serve as modifiers to indicate that the "dimension," "shape," "temperature," "time," or other physical parameter in question need not be exact, but may vary as long as the function that is required to be performed can be carried out. For example, in the phrase "generally circular in shape," the shape need not be exactly circular as long as the required function of the structure in question can be carried out. If a quantitative value is needed to render the applicable parameter sufficiently definite, the applicable parameter is within five percent (5%) of the designated parameter value.

In the present application the term "ferromagnetic material" refers to a material that is strongly attracted by a magnet, or magnetic field, such as iron, steel, nickel, cobalt, etc. Also the term "magnetic holder units" may be referred to as "magnetic units" or "holder units." In addition, the term kitchen utensil(s) may include, for example, knives, spoons, forks, ladles, scoopers, spatulas, scissors, mallets, crackers, presses, tongs, peelers, graters, whisks, can openers, mashers, basters, slicers, measuring cups, brushes slicers, etc.

In the following description, various embodiments of the present disclosure are described. In the following description and in the accompanying drawings, the corresponding systems assemblies, apparatus, and units may be identified by the same part number, but with an alpha suffix or by a prime (" ' ") or double prime (" " ") or even a triple prime (" ‴ ") designation. The descriptions of the parts/components of such systems assemblies, apparatus, and units that are the same or similar are not repeated so as to avoid redundancy in the present application.

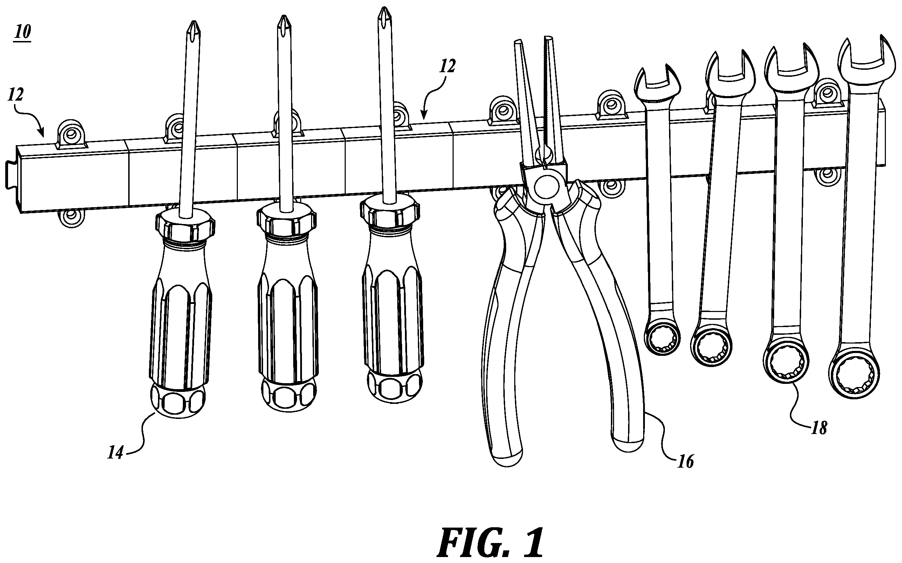

Referring initially to FIGURE 1, a modular magnetic strip holder 10 for holding tools, utensils and other items, such as knives or kitchen utensils, are illustrated as assembled from a plurality of individual magnetic holder units 12 into an elongated holder configuration, illustrated as securely holding various types of tools, including, for example, screwdrivers 14, needle nose pliers 16 and boxer wrenches 18. Various configurations of connectors, as described below, may be utilized to assemble together the individual magnetic holder units 12 so as to form an elongated holder configuration of the desired length, while also enabling the holder 10 to be disassembled if desired.

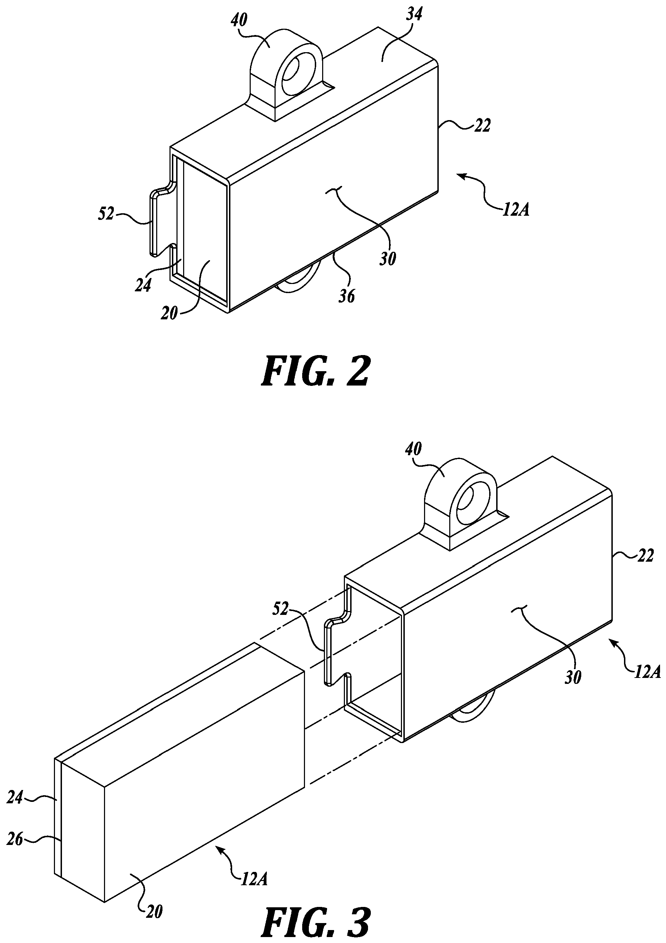

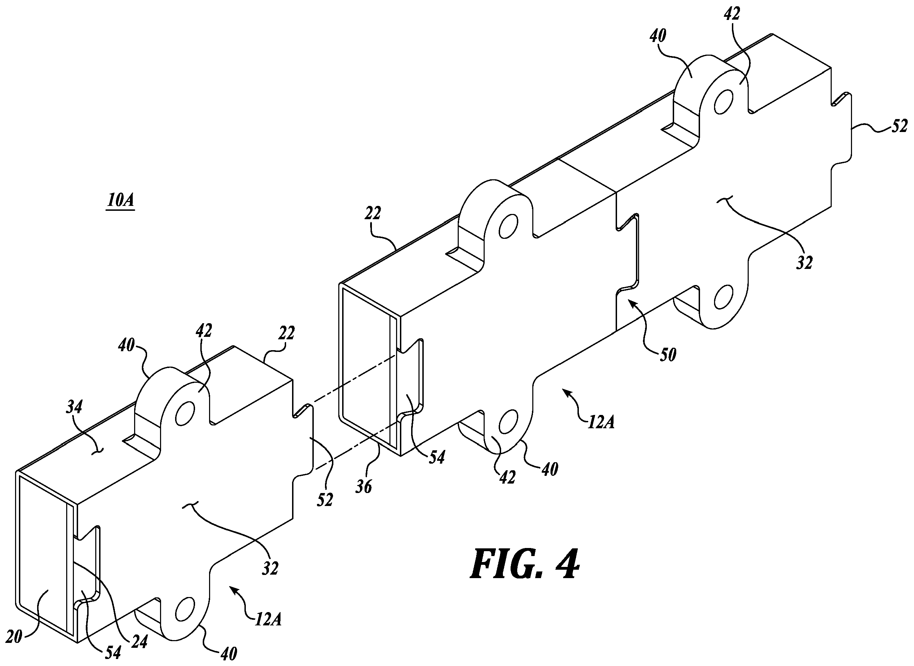

Individual magnetic holder units 12A, not forming part of the invention, are illustrated in FIGURES 2, 3, and 4, which can be assemble together to form a strip holder 10A. The holder units 12A include a magnet 20 disposed within a correspondingly shaped housing 22. A ferromagnetic plate 24 is disposed in face-to-face relationship with the back surface 26 of the magnet 20. The overall shape of the ferromagnetic plate 24 corresponds to that of the magnet 20 so that the ferromagnetic plate overlaps or covers the entire back surface 26 of the magnet 20. The ferromagnetic plate 24 may be attached to the magnet 20 by any convenient means, including with an adhesive.

The magnet 20, together with its corresponding ferromagnetic plate 24, are snuggly received within the housing 22, which housing is open at its ends. The housing 22 includes a substantially planar front surface 30 for receiving there against items to be held, such as tools 14, 16, and 18, as well as knives or other items. Likewise, the back surface 32 of the housing 22 may be substantially flat so as to bear flat against the wall or other surface on which the modular magnetic strip holder 10A may be mounted. The housing 22 also includes a top surface 34 and a bottom surface 36 that span between the front and back surfaces 30 and 32.

The magnet 20 is shaped in the form of a three-dimensional orthotope, with specific forms of orthotopes including right rectangular prisms, rectangular cuboids, and rectangular parallelepipeds. In this regard, each surface of the magnet 20 is rectangular in shape and is disposed at a 90° angle from adjacent services of the magnet. It is to be understood that the magnet 20 does not necessarily have to be in the shape illustrated in FIGURES 2, 3, and 4, but rather can be of other shapes.

As noted above, the ferromagnetic plate 24 is of a shape corresponding to the shape of the magnet 20 so that the magnet 20 together with the ferromagnetic plate 24 form a unitary orthotope shape. It will be appreciated that the ferromagnetic plate 24 enables the strip holder 10A to be mounted on a ferromagnetic surface without the need of mounting screws or bolts or an adhesive or other mounting means. Rather the magnetic holder unit(s) 12A will adhere directly to the ferromagnetic surface via magnetic attraction.

However, if the available mounting surface is not of ferromagnetic composition, mounting projections or ears 40, that extend upwardly from the upper surface 34 and/or downwardly from the lower surface 36 of the housing 22, can be used to mount the magnetic holder unit(s) 12A. Screws, bolts, or other hardware can extend through holes formed in the projections 40 for mounting the magnetic holder units 12A to a surface, in particular to a non-ferromagnetic surface. As shown in FIGURES 2-4, the back surfaces 42 of the mounting projections 40 are co-planer with the back surface 32 of the housing 22. Also, as shown in FIGURES 2 and 3, the through holes in the mounting projections 40 can be countersunk, to accommodate the head of the screw, bolt, or other hardware member.

As also shown in FIGURES 2-4, magnetic holder units 12A are interconnected together by a connection system 50 composed of a dovetail 52 projecting from the housing back surface or wall 32 for engagement into the correspondingly shaped and sized slot 54 formed in the adjacent portion of the housing back surface or wall 32 of the adjacent housing 22. In this manner, as many magnetic holder units 12A as desired may be assembled together.

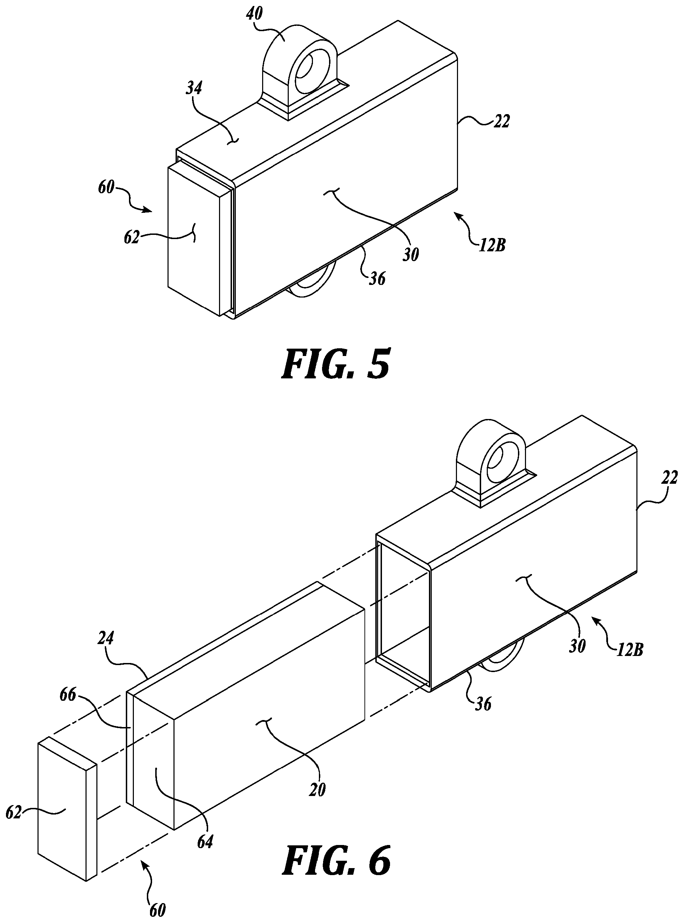

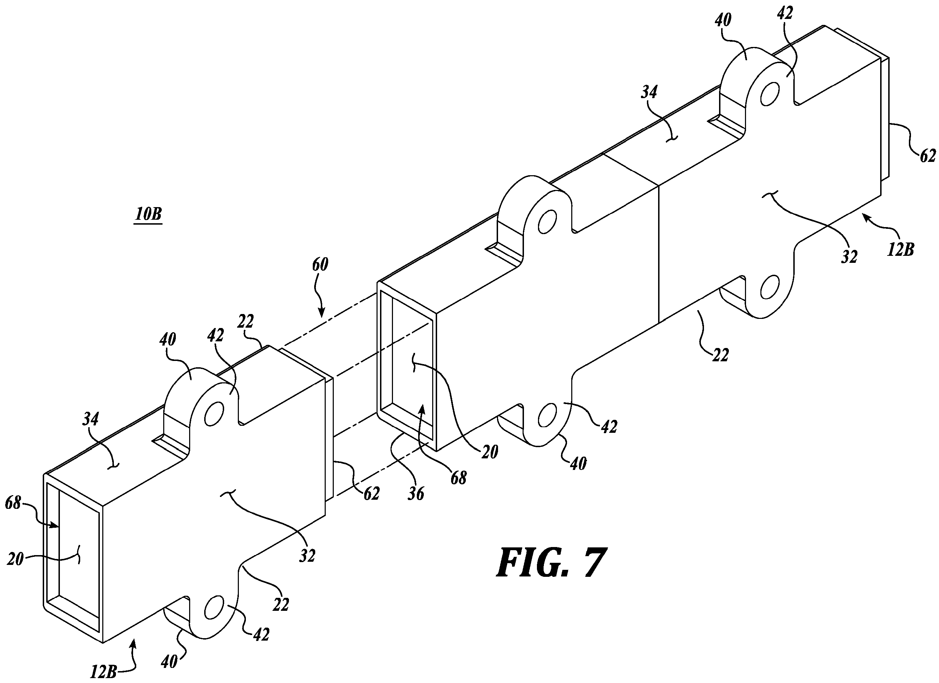

An embodiment of a modular magnetic strip holder 10B according to the invention is illustrated in FIGURES 5, 6, and 7. The components of the modular magnetic strip holder 10B that are the same or very similar to the components of the modular magnetic strip holder 10A are identified by the same part numbers and their description will not be repeated. One difference between the modular magnetic strip holders 10A and 10B is that the construction of the connection system 60 of holder 10B compared to the connection system 50 of holder 10A. The connection system 60 used to interconnect adjacent magnetic holder units 12B includes a second ferromagnetic plate 62 that is positioned transversely over the end 64 of magnet 20 and the end 66 of ferromagnetic plate 24. The second ferromagnetic plate 62 is shaped and sized to closely overlap and cover the ends 64 and 66 of the magnet 20 and ferromagnetic plate 24.

Also, the second ferromagnetic plate 62 projects from the end of the housing 22 to engage within a shallow recess 68 formed in the end of the adjacent housing 22, thereby to physically connect and lock with the magnet 20 of the corresponding magnetic holder unit 12B. In this manner, any number of magnetic holder units 12B can be assembled together to form strip holder 10B in a desired length. Moreover, the magnetic holder units 12B can be easily disassembled and reconfigured if desired.

The housing 22 can be constructed from a plastic, rubber, synthetic rubber, or similar material so as not to scratch the tools, knives, or other utensils or items being held by strip holder 10. Also, the magnet 20 and ferromagnetic plate 24 may be secured within the housing 22 by an adhesive, by shrink fitting, or by other means. Alternatively, the housing 22 can be formed or molded around the magnet 20 and the ferromagnetic plate 22.

While illustrative embodiments of the present disclosure have been illustrated and described, it will be appreciated that various changes can be made therein without departing from the scope of the present invention. For example, in connector system 50 the dovetail 52 can be replaced by projections of other shapes or configurations to engage or lock within corresponding slots or grooves formed in the adjacent housing 22. Also, rather than using a dovetail, a slot, such as slot 54, can be formed at each end of the housing back wall 32 and a double dovetail key can be engageable within the two adjacent slots to lock adjacent magnetic holder units 12A together.

Also, the magnetic strip holder 10 can be used to securely hold or store items in addition to tools and utensils, for example, pots, pans, instruments, etc.

## Claims

1. A magnetic modular strip holder (10) composed of individual magnetic holder units (12) that are interconnected to form a linear strip holder of a desired length for magnetically holding tools, utensils and other items, the magnetic holder units (12) comprising:
an elongate housing (22);
a magnet (20) disposed within the housing (22), the magnet (20) having a front surface, a back surface (26), and two opposing end surfaces;
a first ferromagnetic plate (24) disposed along the back surface (26) of the magnet (20) and within the housing (22); and
an interconnector (50) for interconnecting adjacent individual magnetic holder units (12),
**characterised in that** the interconnector (50) comprises a second ferromagnetic plate (62) attached to one end of the magnet (20) of a first magnetic holder unit (12A) for attraction to the opposite end of an adjacent magnetic holder unit (12B); and
**in that** the second ferromagnetic plate (62) projects from the end of the housing (22) of a first magnetic holder unit (12A) to engage within a shallow recess (68) formed in the end of the housing (22) of an adjacent magnetic holder unit (12B) to thereby physically connect and lock with the magnet (20) of the adjacent magnetic holder unit (12B).

2. The magnetic modular strip holder of Claim 1, wherein the magnet (20) is in the shape of an orthotope.

3. The magnetic modular strip holder of Claim 2, wherein the orthotope is of a shape selected from a right rectangular prism, rectangular cuboid, and rectangular parallelepiped.

4. The magnetic modular strip holder of any one of Claims 1-3, wherein the ferromagnetic plate (24) overlies substantially the entirety of the back surface (26) of the magnet (20).

5. The magnetic modular strip holder of Claim 1, wherein the recess (68) in the housing (22) is sized and shaped to receive the second ferromagnetic plate (62) of the adjacent magnetic holder unit (12A, 12B).

6. The magnetic modular strip holder of any one of Claims 1-5:
wherein the housing (22) comprises top and bottom surfaces (34, 36);
further comprising a mounting projection (40) projecting from at least one of the top and bottom surfaces (34, 36) of the housing (22).

7. The magnetic modular strip holder of Claim 6, wherein a through hole extends through the mounting projection (40) for receiving mounting hardware therethrough.

8. The magnetic modular strip holder of Claim 6:
wherein the housing (22) has a back surface (32) corresponding to the back surface (24) of the magnet (20);
the mounting projection (40) disposed substantially flush with the back surface (32) of the housing (22).

## Patentansprüche

1. Magnetischer modularer Streifenhalter (10), der aus einzelnen magnetischen Haltereinheiten (12) zusammengesetzt ist, die miteinander verbunden sind, um einen linearen Streifenhalter mit einer gewünschten Länge zum magnetischen Halten von Werkzeugen, Utensilien und anderen Gegenständen zu bilden, wobei die magnetischen Haltereinheiten (12) Folgendes umfassen:
ein längliches Gehäuse (22),
einen Magneten (20), der innerhalb des Gehäuse (22) angeordnet ist, wobei der Magnet (20) eine vordere Fläche, eine hintere Fläche (26) und zwei gegenüberliegende Stirnflächen aufweist,
eine erste ferromagnetische Platte (24), die entlang der hinteren Fläche (26) des Magneten (20) und innerhalb des Gehäuses (22) angeordnet ist, und
einen Verbinder (50) zum Verbinden benachbarter einzelner magnetischer Haltereinheiten (12) miteinander,
**dadurch gekennzeichnet, dass**
der Verbinder (50) eine zweite ferromagnetische Platte (62) umfasst, die an einem Ende des Magneten (20) einer ersten magnetischen Haltereinheit (12A) zur Anziehung zu dem gegenüberliegenden Ende einer benachbarten magnetischen Haltereinheit (12B) befestigt ist, und
dadurch, dass die zweite ferromagnetische Platte (62) von dem Ende des Gehäuses (22) einer ersten magnetischen Haltereinheit (12A) vorspringt, um innerhalb einer flachen Aussparung (68) zum Eingriff zu kommen, die in dem Ende des Gehäuses (22) einer benachbarten magnetischen Haltereinheit (12B) geformt ist, um sich dadurch physisch mit dem Magneten (20) der benachbarten magnetischen Haltereinheit (12B) zu verbinden und zu arretieren.

2. Magnetischer modularer Streifenhalter nach Anspruch 1, wobei der Magnet (20) in der Form eines Orthotops vorliegt.

3. Magnetischer modularer Streifenhalter nach Anspruch 2, wobei das Orthotop eine Form hat, die ausgewählt ist aus einem geraden rechteckigen Prisma, einem rechteckigen Quader und einem rechteckigen Parallelepiped.

4. Magnetischer modularer Streifenhalter nach einem der Ansprüche 1 bis 3, wobei die ferromagnetische Platte (24) im Wesentlichen die Gesamtheit der hinteren Fläche (26) des Magneten (20) überlagert.

5. Magnetischer modularer Streifenhalter nach Anspruch 1, wobei die Aussparung (68) in dem Gehäuse (22) dafür bemessen und geformt ist, die zweite ferromagnetische Platte (62) der benachbarten magnetischen Haltereinheit (12A, 12B) aufzunehmen.

6. Magnetischer modularer Streifenhalter nach einem der Ansprüche 1 bis 5:
wobei das Gehäuse (22) eine obere und eine untere Fläche (34, 36) umfasst,
ferner umfassend einen Montagevorsprung (40), der von mindestens einer von der oberen und der unteren Fläche (34, 36) des Gehäuses (22) vorspringt.

7. Magnetischer modularer Streifenhalter nach Anspruch 6, wobei sich ein Durchgangsloch zum Aufnehmen von Montagebeschlagteilen durch dasselbe durch den Montagevorsprung (40) erstreckt.

8. Magnetischer modularer Streifenhalter nach Anspruch 6:
wobei das Gehäuse (22) eine hintere Fläche (32) aufweist, die der hinteren Fläche (26) des Magneten (20) entspricht,
wobei der Montagevorsprung (40) im Wesentlichen bündig mit der hinteren Fläche (32) des Gehäuses (22) angeordnet ist.

## Revendications

1. Support en bande modulaire magnétique (10) composé d'unités de support magnétiques (12) individuelles, lesquelles sont interconnectées de manière à former un support en bande linéaire d'une longueur souhaitée, destiné à maintenir magnétiquement des outils, des ustensiles ou d'autres articles, les unités de support magnétiques (12) comprenant :
un boîtier allongé (22) ;
un aimant (20) disposé à l'intérieur du boîtier (22), l'aimant (20) présentant une surface avant, une surface arrière (26) et deux surfaces d'extrémité opposées ;
une première plaque ferromagnétique (24) disposée le long de la surface arrière (26) de l'aimant (20) et à l'intérieur du boîtier (22) ; et
un élément d'interconnexion (50) destiné à interconnecter des unités de support magnétiques (12) individuelles adjacentes,
**caractérisé en ce que**
l'élément d'interconnexion (50) comprend une deuxième plaque ferromagnétique (62) fixée à une extrémité de l'aimant (20) d'une première unité de support magnétique (12A), destinée à être attirée vers l'extrémité opposée d'une unité de support magnétique adjacente (12B) ; et
**en ce que** la deuxième plaque ferromagnétique (62) fait saillie à partir de l'extrémité du boîtier (22) d'une première unité de support magnétique (12A) pour s'engager dans un évidement peu profond (68) formé dans l'extrémité du boîtier (22) d'une unité de support magnétique adjacente (12B), pour ainsi se connecter physiquement et se verrouiller avec l'aimant (20) de l'unité de support magnétique adjacente (12B).

2. Support en bande modulaire magnétique selon la revendication 1, dans lequel l'aimant (20) présente une forme d'orthotope.

3. Support en bande modulaire magnétique selon la revendication 2, dans lequel l'orthotope présente une forme sélectionnée parmi un prisme rectangulaire droit, un cuboïde rectangulaire et un parallélépipède rectangulaire.

4. Support en bande modulaire magnétique selon l'une quelconque des revendications 1 à 3, dans lequel la plaque ferromagnétique (24) recouvre quasiment la totalité de la surface arrière (26) de l'aimant (20).

5. Support en bande modulaire magnétique selon la revendication 1, dans lequel l'évidement (68) dans le boîtier (22) est dimensionné et formé pour recevoir la deuxième plaque ferromagnétique (62) de l'unité de support magnétique adjacente (12A, 12B).

6. Support en bande modulaire magnétique selon l'une quelconque des revendications 1 à 5,
dans lequel le boîtier (22) comprend des surfaces supérieure et inférieure (34, 36) ;
comprenant en outre une saillie de montage (40) faisant saillie à partir de l'une au moins parmi les surfaces supérieure et inférieure (34, 36) du boîtier (22).

7. Support en bande modulaire magnétique selon la revendication 6, dans lequel un trou traversant s'étend à travers la saillie de montage (40) pour la réception de matériel de montage à travers celle-ci.

8. Support en bande modulaire magnétique selon la revendication 6,
dans lequel le boîtier (22) présente une surface arrière (32) correspondant à la surface arrière (26) de l'aimant (20) ;
la saillie de montage (40) étant disposée quasiment en affleurement avec la surface arrière (32) du boîtier (22).
